Europäisches Patentamt

European Patent Office

Office européen des brevets

(11) Numéro de publication: **0 076 214**
**A1**

## (12) DEMANDE DE BREVET EUROPEEN

(21) Numéro de dépôt: 82401743.8

(22) Date de dépôt: 27.09.82

(51) Int. Cl.³: **B 60 R 25/02**

(30) Priorité: 30.09.81 FR 8118401

(43) Date de publication de la demande:
06.04.83 Bulletin 83/14

(84) Etats contractants désignés:
BE DE GB IT LU NL

(71) Demandeur: COMPAGNIE INDUSTRIELLE ET
COMMERCIALE DE TUBES : S.A. dite
B.P. 18
F-75860 Paris Cedex(FR)

(72) Inventeur: Cuvillier, Gabriel
54, Avenue de la Valmy
F-92700 Colombes(FR)

(72) Inventeur: Valin, Daniel
23, rue Jean-Baptiste Clément
F-94150 La Queue en Brie(FR)

(74) Mandataire: Roger-Petit, Jean-Camille et al,
OFFICE BLETRY 2, Boulevard de Strasbourg
F-75010 Paris(FR)

(54) Arbre de commande de direction.

(57) Cet arbre de commande de direction de véhicules est du type de ceux utilisés sur les véhicules destinés à être munis d'un dispositif antivol par blocage de la direction; il ne comporte pas de bague antivol fixée sur lui de la façon usuelle mais il est tubulaire et il est agencé de façon à comporter, au niveau où l'on ajoute généralement la bague antivol, une partie de plus grand diamètre, égal à celui d'une telle bague antivol, et de plus grande épaisseur, percée d'une fente longitudinale analogue à celle de la bague antivol, et destinée à recevoir le pène de la serrure lorsque celle-ci est en position "arrêt" ou "garage".

Fig. 1

EP 0 076 214 A1

Les arbres de commande de direction des véhicules automobiles, destinés à être entraînés en rotation par le volant de direction, sont montés pivotants dans un tube de direction coaxial, qui est fixe.

Lorsque le véhicule comporte un dispositif antivol, monté sur ledit tube de direction, et destiné à bloquer en rotation les roues avant du véhicule lorsqu'il est mis en position "arrêt", ou en position "garage", une bague est fixée autour de cet arbre de direction, au niveau de l'appareil antivol, et elle comporte une fente longitudinale dans laquelle peut pénétrer et se loger le pène de la serrure de l'appareil antivol, lorsqu'au moyen de la clé prévue à cet effet, l'utilisateur a commandé la serrure dudit appareil antivol pour la mettre en positions "arrêt" ou "garage".

Le prix de vente du véhicule est donc grèvé du coup d'une telle bague et surtout de celui des opérations nécessitées par sa mise en place.

La présente invention a pour objet un arbre de direction de véhicules automobiles qui évite ces inconvénients.

A cet effet, cet arbre de direction est tubulaire et il est agencé de façon à comporter, au niveau où l'on ajoute généralement cette bague antivol, une partie de plus grand diamètre égal à celui d'une telle bague antivol, et de plus grande épaisseur, percée d'une fente longitudinale analogue à celle de la bague antivol, et destinée à recevoir le pène de la serrure lorsque celle-ci est en position "arrêt" ou "garage".

Cet arbre de direction tubulaire comportant une partie de plus grand diamètre et de plus grande épaisseur peut être obtenu très facilement en utilisant le procédé décrit dans un ou plusieurs des brevets antérieurs n° 76/32701, 76/32702 et 80/01302 de la société demanderesse, c'est-à-dire par déformation à froid d'un tube au moyen d'une série d'opérations successives appropriées de rétreint et d'étirage.

Le dessin annexé montre à titre d'exemple un mode de réalisation de la présente invention :

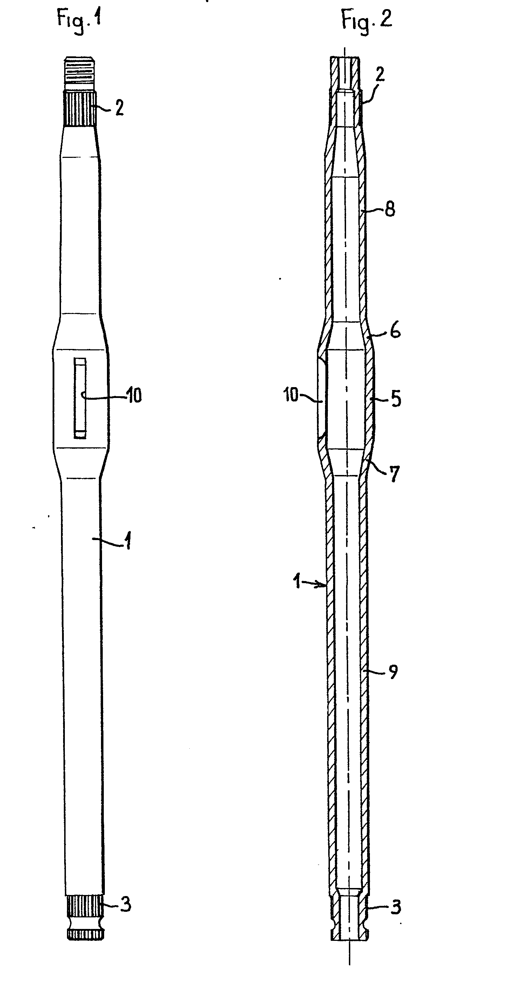

la figure 1 est une vue en élévation d'un tel arbre de direction.

La figure 2 est une vue en coupe longitudinale.

L'arbre de direction 1, comportant de façon connue des embouts 2 et 3 adéquats, est tubulaire ; il comporte une partie 5 de plus grand diamètre et de plus grande épaisseur, raccordés par des parties tronconiques 6 et 7 à ses deux extrémités 8 et 9. Ladite partie 5 de plus grand diamètre, correspondant à celui des bagues antivol des arbres de direction classiques, et de plus grande épaisseur, est prévue au même niveau que celui des bagues antivol classiques, et percée d'une rainure longitudinale 10, analogue à celle des bagues antivol, et destinée à recevoir le pène de la serrure antivol lorsque celui-ci est mis en position "arrêt" ou "garage".

Il est du reste bien entendu que le mode de réalisation de la présente invention qui a été décrit ci-dessus en référence au dessin annexé a été donné à titre purement indicatif et non limitatif et que de nombreuses modifications peuvent être apportées sans qu'on s'écarte pour cela du cadre de la présente invention.

REVENDICATIONS
----------------

1. Arbre de commande de direction de véhicules destiné à être muni d'un dispositif antivol par bloquage dudit arbre caractérisé en ce que cet arbre de direction est tubulaire et il est agencé de façon à comporter, au niveau où l'on ajoute généralement une bague antivol, une partie de plus grand diamètre, égal à celui d'une telle bague antivol, et de plus grande épaisseur, destinée à recevoir le pène de la serrure lorsque celle-ci est en position "arrêt" ou "garage".

2. Arbre de commande de direction de véhicules suivant la revendication 1 caractérisé en ce qu'il est obtenu par déformation à froid d'un tube au moyen d'une série d'opérations successives appropriées de rétreint et d'étirage.

Fig.1

Fig.2

2

10

1

3

2

8

6

10 5

7

1

9

3

Office européen
des brevets

**RAPPORT DE RECHERCHE EUROPEENNE**

EP  82 40 1734

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | BE-A- 840 674 (FABRIQUE NATIONALE) *Page 2, paragraphes 2,5; page 3, paragraphe 1; page 5, paragraphes 3,4; page 9, paragraphe 1; figures 6-10* | 1 | F 42 C  19/12<br>F 42 B   3/12 |
| A | | 2,3 | |
| X | US-A-3 426 682 (CORREN) *Colonne 2, lignes 24-68; colonne 6, lignes 12-22; colonne 8, lignes 31-48; colonne 9, lignes 14-56; colonne 10, lignes 18-56; figures 6,7,8,10,12* | 1,2,3 | |
| X | GB-A-2 049 651 (BROCK'S FIREWORKS) *Page 1, lignes 3-5,40-44* | 1 | **DOMAINES TECHNIQUES RECHERCHES (Int. Cl. ³)** |
| A | FR-A-2 090 579 (DYNAMIT NOBEL) *Page 2, lignes 19-26; page 4, lignes 18-40; page 5, lignes 1-18; figures 1-6* | 1,2,3 | F 42 C<br>F 42 B |
| A | US-A-3 333 538 (SCHNETTLER) | | |

Le présent rapport de recherche a été établi pour toutes les revendications

| Lieu de la recherche<br>LA HAYE | Date d'achèvement de la recherche<br>05-01-1983 | Examinateur<br>VAN DER PLAS J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................

& : membre de la même famille, document correspondant

OEB Form 1503. 03.82